# EUROPEAN PATENT APPLICATION

(11) **EP 2 002 957 A1**
(43) Date of publication of application: **17.12.2008**
(21) Application number: 08010354.2
(22) Date of filing: 06.06.2008
(51) Int. Cl.: B29C 45/00

(54) **Injection-molded article**

(30) Priority: 11.06.2007 JP 2007154179
(71) Applicant: ALPS ELECTRIC CO., LTD., Tokyo 145-8501 (JP)
(72) Inventor: Nakaoka, Kaori, Tokyo 145-8501 (JP); Satoshi, Asayama, Tokyo 145-8501 (JP)
(74) Representative: Klunker . Schmitt-Nilson . Hirsch

(57) **Abstract**

An injection-molded article that can allow the position of the weld line in the opening to be displaced greatly is provided. The injection-molded article includes a plate-like member 1 in which an opening 2 is formed in the vicinity of a edge 3 of the plate-like member 1. Here, the plate-like member 1 has a suspending portion 11 closer to the edge 3 than the opening 2, a base portion 10 facing the suspending portion 11 with the opening interposed therebetween, and two side portions 12, 13 that are located between the base portion 10 and the suspending portion 11 and that face each other with the opening 2 interposed therebetween, and is formed by injection by allowing a resin to flow from the base portion 10. A recessed portion 14 having a shape continuous from the inner circumferential surface of the opening 2 and extending so as to get apart from the inner circumferential surface of the opening 2 is formed on one side portion 13.

## Description

### BACKGROUND

### 1. Technical Field

The present invention relates to an injection-molded article formed by molding a resin by injection, and more particularly, to an injection-molded article in which an opening is formed in the vicinity of an edge of a plate-like member and a hook-like engaging piece can freely engage with the opening.

### 2. Related Art

An injection-molded article formed by molding a resin by injection is obtained by forming a space section having a complete article shape between opposed molds, injecting a liquid resin from an injection port into the opposed molds so as to flow in the space section, and cooling and releasing the resin when the space section is filled with the resin, thereby taking out the complete article.

For example, in a case including two members, a structure for unifying both members by forming a hook-like engaging piece in one member, forming an opening in the vicinity of an edge of a plate-like side wall of the other member, and allowing the engaging piece to engage with the opening from the edge is known. An opening may be formed in a plate-like portion so as to form a screw hole. In this way, when an opening is formed in an injection-molded article, a resin flowing in the mold at the time of molding the article is branched at one side of the opening and is merged at the opposite side, whereby a weld line is essentially formed.

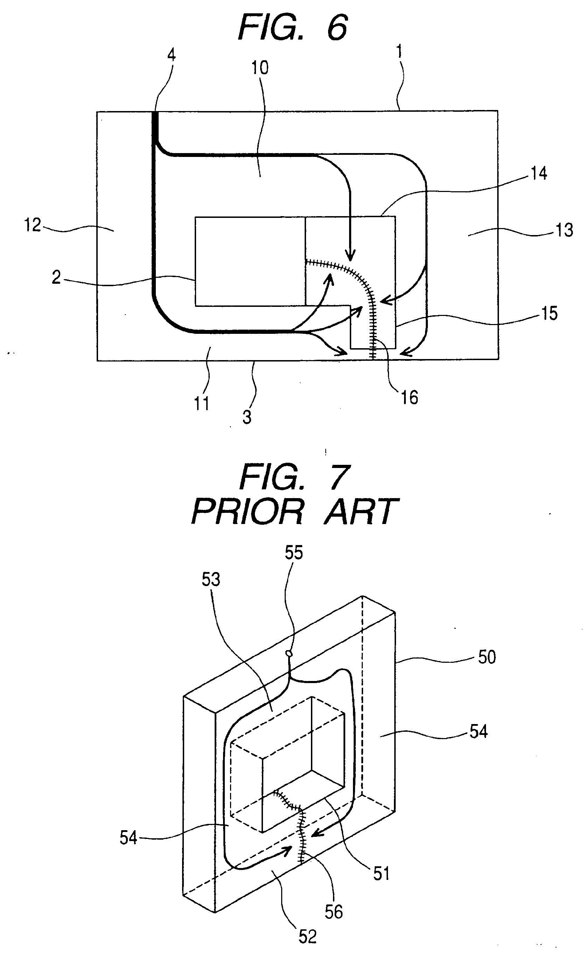

Fig. 7 is a perspective view illustrating a plate-like member having an opening, which is formed by an injection molding process. As shown in the figure, an opening 51 is formed in the vicinity of an edge of a plate-like member 50. It is assumed that the opening 51 engages with a hook-like engaging piece formed in another member. The opening 51 has a rectangular shape, where a portion close to the edge is a suspending portion 52, a portion close to a resin injecting port 55 and facing the suspending portion with the opening 51 interposed therebetween is a base portion 53, and portions connecting the base portion 53 to the suspending portion 52 are side portions 54.

A resin injected from the injecting port 55 first flows into the base portion 53 and then flows toward the opening 51. When the resin reaches the opening 51, the resin is branched laterally and flows into both side portions 54. Finally, the resin flows into the suspending portion 52 from both sides and is merged substantially at the center of the suspending portion 52 to form a weld line 56.

The central portion of the suspending portion 52 is a portion to which the largest load is applied when the engaging piece engages with the opening 51. However, in this way, when the weld line 56 is formed substantially at the center of the suspending portion 52, the suspending portion 52 could be easily destructed because of the small strength of the weld line 56.

In order to prevent such a problem, a technique of displacing the position of the weld line by forming a recessed portion extending in a direction parallel to the inner circumferential surface of the opening in the vicinity of one side of the opening so as to allow the resin to fast flow in the recessed portion is known. Such a technique is disclosed, for example, in Japanese Unexamined Patent Application Publication No. H9-234757.

However, by forming the recessed portion along the opening, the position of the welding line can be slightly displaced, but it is difficult to greatly displace the position so as to depart from the suspending portion. In case of the injection-molded article shown in Fig. 7, even when the position of the weld line is slightly displaced from the center of the suspending portion, it is not sufficient for preventing the destruction of the suspending portion. Accordingly, it is necessary to further greatly displace the position of the welding line in the opening to the side portion.

### SUMMARY

The invention is contrived to solve the above-mentioned problem. It is an object of the invention to provide an injection-molded article that can allow the position of the weld line in the opening to be displaced greatly.

In order to accomplish the above-mentioned object, according to an aspect of the invention, there is provided an injection-molded article comprising a plate-like member in which an opening is formed in the vicinity of an edge of the plate-like member. Here, the plate-like member has a suspending portion closer to the edge than the opening, a base portion facing the suspending portion with the opening interposed therebetween, and two side portions that are located between the base portion and the suspending portion and that face each other with the opening interposed therebetween, and is formed by injection by allowing a resin to flow from the base portion. A recessed portion having a shape continuous from the inner circumferential surface of the opening and extending so as to get apart from the inner circumferential surface of the opening is formed on one of the side portions.

In the inj ection-molded article, a longitudinal recessed portion extending from the recessed portion toward the edge may be formed.

In the injection-molded article, the plate-like member may be molded by injection by allowing the resin to flow from the base portion close to the side portion opposite to the side portion in which the recessed portion is formed.

In the injection-molded article, an engaging piece sliding groove extending from the edge to the opening may be formed in the suspending portion.

In the injection-molded article according to the invention, since the recessed portion continuous from the inner circumferential surface of the opening and extending to get apart from the opening is formed in one of the side portions, the flow rate of the resin flowing in the recessed portion can be reduced. Accordingly, since the merging position with the resin flowing from the other side portion is displaced from the suspending portion and thus the welding line can be displaced greatly from the suspending portion, it is possible to prevent the strength of the suspending portion from being reduced.

In the injection-molded article according to the invention, since the longitudinal recessed portion extending from an end close to the suspending portion to the edge is formed in the recessed portion, it is possible to reduce the flow rate of the resin making a bend from the outside of the recessed portion and to displace the position of the weld line more to be apart from the suspending portion.

In the injection-molded article according to the invention, since the plate-like member is molded by injection by allowing the resin to flow from the base portion close to the side portion opposite to the side portion in which the recessed portion is formed, the path of the resin flowing to the recessed portion is elongated. Accordingly, it is possible to displace the position of the weld line to be more apart from the suspending portion.

In the injection-molded article according to the invention, since the engaging piece sliding groove extending from the edge to the opening is formed in the suspending portion, it is possible to allow the engaging portion to smoothly engage with the opening.

### BRIEF DESCRIPTION OF THE DRAWINGS

Fig. 1 is a perspective view illustrating an injection-molded article according to a first embodiment of the invention.
Fig. 2 is a plan view of a plate-like member, where a flow of a resin at the time of performing an injection molding process is shown according to the first embodiment.
Fig. 3 is a perspective view illustrating an injection-molded article according to a second embodiment of the invention.
Fig. 4 is a plan view of a plate-like member, where a flow of a resin at the time of performing an injection molding process is shown according to the second embodiment.
Fig. 5 is a perspective view illustrating an injection-molded article according to a third embodiment of the invention.
Fig. 6 is a plan view of a plate-like member, where a flow of a resin at the time of performing an injection molding process is shown according to the third embodiment.
Fig. 7 is a perspective view of a conventional plate-like member having an opening which is formed by an injection molding process.

### DESCRIPTION OF EXEMPLARY EMBODIMENTS

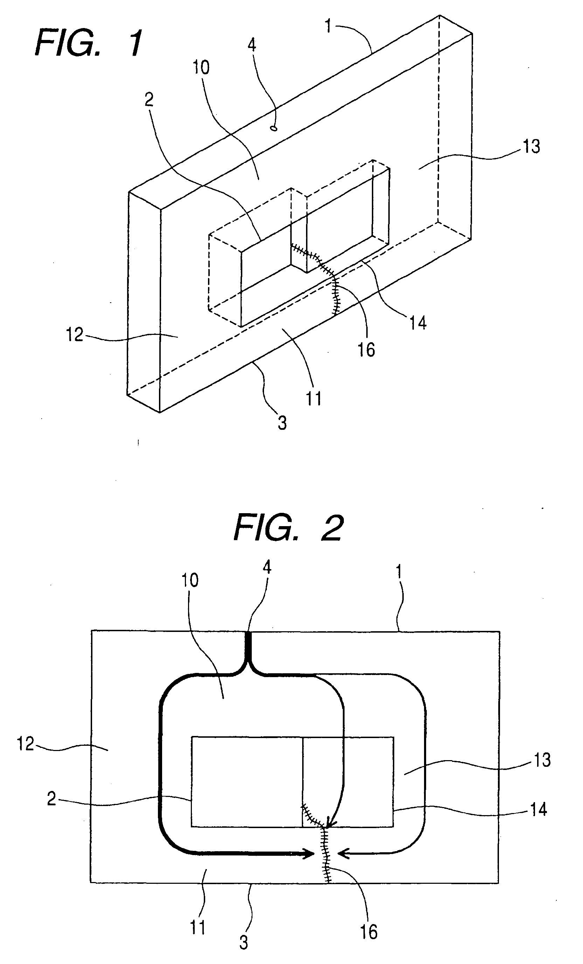

Exemplary embodiments of the invention will be described in detail with reference to the accompanying drawings. Fig. 1 is a perspective view illustrating an injection-molded article according to a first embodiment of the invention. As shown in the figure, the injection-molded article has a plate-like member 1 formed in a plate shape and a rectangular opening 2 is formed in the plate-like member 1.

The opening 2 is formed in the vicinity of an edge 3 of plural edges of the plate-like member 1. In the plate-like member 1, four circumferential portions surrounding the opening 2 are a base portion 10, a suspending portion 11, a first side portion 12, and a second side portion 13. A portion closer to the edge portion 3 than the opening 2 is the suspending portion 11 connecting the side portions 12 and 13. A portion facing the suspending portion 11 with the opening 2 interposed therebetween is the base portion 10. The plate-like member 1 has a resin injecting port mark 4 formed at the time of performing an injection molding process on the circumferential surface close to the base portion 10. That is, at the time of performing an injection-molding process, a resin injecting port is disposed in a portion of a mold corresponding to the injecting port mark 4, a resin is injected from the injecting port, and the injected resin flows and fills the space portion corresponding to the shape of the plate-like member 1.

The first side portion 12 and the second side portion 13 are located between the base portion 10 and the suspending portion 11. At the time of performing an injection molding process, the resin injected from the position of the injecting port mark 4 and laterally branched by the opening 2 flows toward the suspending portion 11. A recessed portion 14 continuous to the inner circumferential surface of the opening 2 is formed close to the second side portion 13. The recessed portion 14 extends to get apart from the inner circumferential surface of the opening 2. In the mold for the injection molding process, a flow path is narrowed by the thickness of the recessed portion 14 to form a flow resistance greater than that of the other position and thus the resin flowing in the flow path decreases in flow rate.

Fig. 2 is a plan view of the plate-like member 1, which the flow of the resin at the time of performing the injection molding process is shown. In the figure, the thicknesses of lines schematically indicate the flow rates of the resin. As shown in Fig. 2, the resin injected from the portion corresponding to the injecting port mark 4 flows in the base portion 10 toward the opening 2, is branched into both sides of the opening 2 at the same flow rate, and flows into the first side portion 12 and the second side portion 13.

The resin flowing into the first side portion 12 flows around the opening 2 and flows into the suspending portion 11 from the left of the figure without any change in flow rate. On the other hand, some of the resin flowing into the second side portion 13 flows into the recessed portion 14 formed close to the edge of the opening 2 and the other flows into the region outside the recessed portion 14, thereby flowing to the suspending portion 11. Here, since the thickness of the recessed portion 14 is smaller than that of the other region, the resin flowing into the recessed portion 14 suffers from a great flow resistance and thus decreases in flow rate. The resin flowing into the region outside the recessed portion 14 moves farther than the resin flowing into the first side portion 12 and reaches the suspending portion 11.

The resin flowing in the second side portion 13 reaches the suspending portion 11 later than the resin flowing in the first side portion 12. Accordingly, both resins are merged at a position closer to the second side portion 13 rather than the suspending portion 11. As shown in Fig. 2, the resin passing through the recessed portion 14 formed in the second side portion 13 is merged with the resin passing through the first side portion 12 in the recessed portion 14 and the resin passing through the second side portion 13 outside the recessed portion 14 is merged with the resin passing through the first side portion 12 at a position outside the region including the opening edge of the suspending portion 11. A weld line 16 is formed at the merging position.

In this embodiment, since the recessed portion 14 being continuous to the inner circumferential surface of the opening 2 and extending to get apart therefrom is formed in the second side portion 13, it is possible to reduce the flow rate of the resin in the second side portion 13. Accordingly, the merging position with the resin from the first side portion 12 can be made to be greatly displaced from the center of the suspending portion 11 toward the second side portion 13. As a result, since the position of the weld line 16 is displaced from the suspending portion 11, it is possible to prevent the strength of the suspending portion 11 from being reduced.

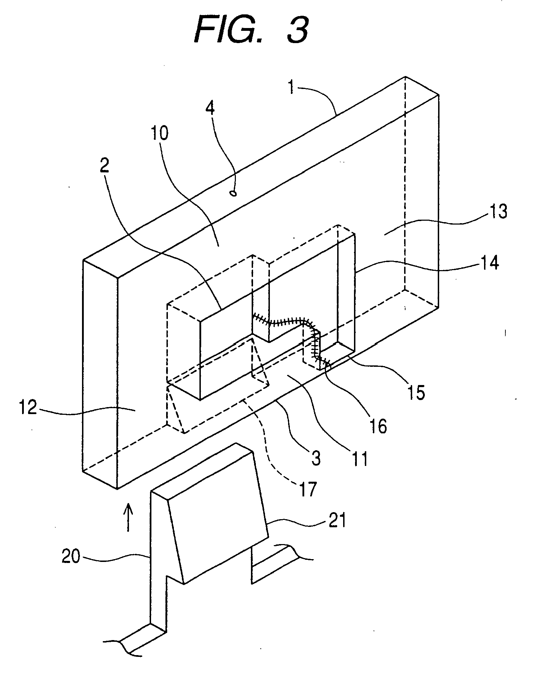

A second embodiment of the invention will be described now. Fig. 3 is a perspective view illustrating an injection-molded article according to the second embodiment of the invention. As shown in the figure, in this embodiment, similarly to the first embodiment, the injection-molded article includes a plate-like member 1 and an opening 2 is formed in the vicinity of one edge 3.

In this embodiment, the opening 2 serves as an engaging hole engaging with an engaging piece 20 from the edge 3. The engaging piece 20 has a hook-like end to form an engaging hook 21 engages with the opening 2 by allowing the engaging hook to come in contact with the back side of the plate-like member 1 in the figure and to slide to the opening 2. At this time, in order to allow the engaging hook 21 to easily slide, an engaging piece slide groove 17 extending from the edge 3 to the opening 2 is formed in the plate-like member 1.

The second embodiment is similar to the first embodiment that the recessed portion 14 is formed continuous to the inner circumferential surface of the opening 2. The second embodiment is different from the first embodiment in that a longitudinal recessed portion 15 extending toward the edge 3 from the surface of the opening 14 close to the edge 3 is additionally formed.

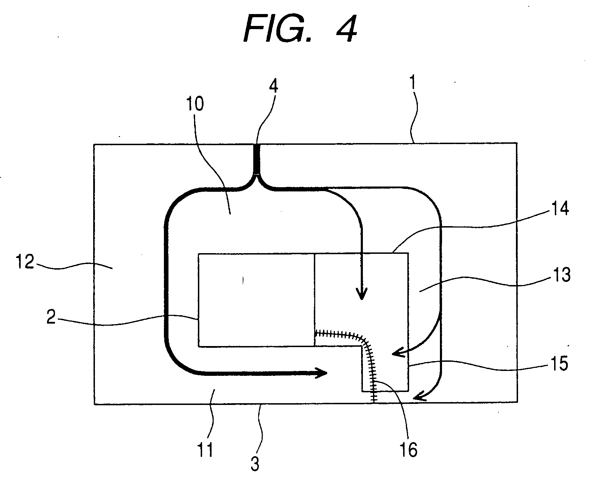

Fig. 4 is a plan view of the plate-like member 1, where the flow of the resin in this case is shown. As shown in the figure, in this embodiment, similarly to the first embodiment, the resin injected from the portion corresponding to the injecting port mark 4 flows in the base portion 10 toward the opening 2, is branched into both sides by the opening 2 at the same flow rate, and flows into the first side portion 12 and the second side portion 13.

The resin flowing in the recessed portion 14 close to the second side portion 13 flows toward the suspending portion 11, similarly to the example shown in Fig. 2. On the other hand, some of the resin flowing into the region of the second side portion 13 outside the recessed portion 14 moves around the recessed portion 14 to flow into the longitudinal recessed portion 15 and the other resin flows to move around the outside of the longitudinal recessed portion 15. The longitudinal recessed portion 15 has the same depth as the recessed portion 14 and thus the resin flowing therein suffers from a great flow resistance to reduce its flow rate. The resin flowing in the region outside the longitudinal recessed portion 15 does not vary in flow rate, but moves farther around the longitudinal recessed portion 15 to the suspending portion 11.

Accordingly, the resin flowing in the second side portion 13 and flowing in the region outside the recessed portion 14 is merged with the resin flowing in the first side portion 12 at a position more apart from the suspending portion 11 in the first embodiment due to the longitudinal recessed portion 15. On the other hand, the resin flowing in the recessed portion 14 flows in the same way as the first embodiment to form the weld line 16 shown in Figs. 3 and 4.

In this way, by forming the longitudinal recessed portion 15 in addition to the recessed portion 14, it is possible to displace the weld line 16 to a position more apart from the suspending portion 11, thereby more reliably preventing the decrease in strength of the suspending portion 11.

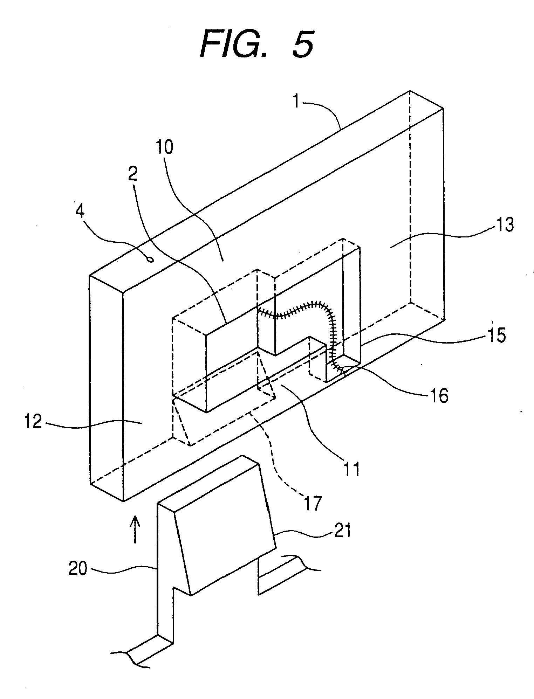

A third embodiment of the invention will be described now. Fig. 5 is a perspective view of an injection-molded article according to a third embodiment of the invention. As shown in the figure, the injection-molded article according to this embodiment is completely equal to that according to the second embodiment in shape. The injection-molded article according to this embodiment is different from that according to the second embodiment in position of the resin injecting port mark 4. While the position is located right above the lateral center of the opening 2 in the first and second embodiment, the position is closer to the first side portion 12 in this embodiment.

Fig. 6 is a plan view of the plate-like member 1, where the flow of the resin in this embodiment is shown. As shown in the figure, the resin injected from a portion corresponding to the injecting port mark 4 is branched toward the first side portion 12 and the base portion 10, the resin flowing into the first side portion 12 flows toward the suspending portion 11, and the resin flowing into the base portion 10 flows to the suspending portion 11 through the second side portion 13.

In this way, by locating the resin injecting port at a position displaced to the first side portion 12, the resin flowing in the second side portion 13 moves farther to reach the suspending portion 11 farther than that in the second embodiment. Accordingly, the merging position with the resin flowing in the first side portion 12 is further displaced to the second side portion 13. As a result, the position of the weld line 16 is displaced to the second side portion 13, thereby more reliably preventing the decrease in strength of the suspending portion 11.

Although the embodiments of the invention have been described, the invention is not limited to the embodiments, but may be modified in various forms without departing from the technical spirit of the invention. Particularly, although only the plate-like member 1 having the opening 2 has been described as the injection-molded article in the embodiments, the invention can be similarly applied to complex injection-molded articles having such a plate-like member 1. For example, in a member having a top surface and side surfaces constituting a box, when the lower ends of the side surfaces are used as the edges and plural openings engaging with hook-like engaging pieces formed in a member constituting a bottom surface are formed in the vicinity of the edges, it is possible to displace the weld lines apart from the portions corresponding to the suspending portions by forming recessed portions or longitudinal recessed portions in the openings.

## Claims

1. An injection-molded article comprising a plate-like member (1) in which an opening (2) is formed in the vicinity of an edge (3) of the plate-like member (1), wherein the plate-like member (1) has a suspending portion (11) closer to the edge (3) than the opening (2), a base portion (10) facing the suspending portion (11) with the opening (2) interposed therebetween, and two side portions (12, 13) that are located between the base portion (10) and the suspending portion (11) and that face each other with the opening (2) interposed therebetween, and is formed by injection by allowing a resin to flow from the base portion (10), **characterized in that** a recessed portion (14) having a shape continuous from the inner circumferential surface of the opening (2) and extending so as to get apart from the inner circumferential surface of the opening (2) is formed on one of the side portions (12, 13).

2. The injection-molded article according to claim 1, wherein a longitudinal recessed portion (15) extending from the recessed portion (14) toward the edge (3) is formed.

3. The injection-molded article according to claim 1 or 2, wherein the plate-like member (1) is molded by injection by allowing the resin to flow from the base portion (10) close to the side portion (12) opposite to the side portion (13) in which the recessed portion (14) is formed.

4. The injection-molded article according to any one of claims 1 to 3, wherein an engaging piece sliding groove (17) extending from the edge (3) to the opening (2) is formed in the suspending portion (11).
